(19) Europäisches Patentamt / European Patent Office / Office européen des brevets

(11) **EP 3 345 234 B1**

(12) # FASCICULE DE BREVET EUROPEEN

(45) Date de publication et mention
de la délivrance du brevet:
**19.06.2019 Bulletin 2019/25**

(21) Numéro de dépôt: **16763923.6**

(22) Date de dépôt: **24.08.2016**

(51) Int Cl.:
*H01M 4/13* (2010.01)     *H01M 4/139* (2010.01)
*H01M 4/62* (2006.01)     *H01M 10/0525* (2010.01)
*H01M 10/058* (2010.01)     *H01M 10/44* (2006.01)

(86) Numéro de dépôt international:
**PCT/FR2016/052111**

(87) Numéro de publication internationale:
**WO 2017/037363 (09.03.2017 Gazette 2017/10)**

(54) **PROCEDE DE FORMATION D'UNE CELLULE DE BATTERIE LI-ION EQUIPEE D'UNE ELECTRODE POSITIVE COMPRENANT UN SEL SACRIFICIEL**

VERFAHREN ZUR HERSTELLUNG EINER ZELLE EINER LITHIUM-IONEN-BATTERIE MIT EINER POSITIVELEKTRODE MIT OPFERSALZ

METHOD FOR FORMING A CELL OF A LITHIUM-ION BATTERY PROVIDED WITH A POSITIVE ELECTRODE COMPRISING A SACRIFICIAL SALT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.09.2015 FR 1558138**

(43) Date de publication de la demande:
**11.07.2018 Bulletin 2018/28**

(73) Titulaire: **Renault S.A.S.**
**92100 Boulogne-Billancourt (FR)**

(72) Inventeurs:
• **DELOBEL, Bruno**
**92130 Issy-Les-Moulineaux (FR)**
• **CHAKIR, Mohamed**
**91180 Saint-germain-les-arpajon (FR)**
• **REYNIER, Yvan**
**38120 Saint-egreve (FR)**
• **MASSE, Florence**
**75015 Paris (FR)**

(56) Documents cités:
FR-A1- 2 961 634     US-A1- 2012 105 007
US-A1- 2014 315 104     US-A1- 2015 064 568

• SHANMUKARAJ D ET AL: "Sacrificial salts: Compensating the initial charge irreversibility in lithium batteries", ELECTROCHEMISTRY COMMUNICATIONS, ELSEVIER, AMSTERDAM, NL, vol. 12, no. 10, 1 octobre 2010 (2010-10-01), pages 1344-1347, XP027423660, ISSN: 1388-2481, DOI: 10.1016/J.ELECOM.2010.07.016 [extrait le 2010-10-01]

## Description

L'invention concerne le domaine général des batteries rechargeables lithium-ion.

L'invention concerne plus précisément un procédé de formation d'une cellule de batterie comprenant un matériau pour électrode positive comprenant au moins un sel sacrificiel.

Classiquement, les batteries Li-ion comprennent une ou plusieurs cathodes, une ou plusieurs anodes, un électrolyte et un séparateur composé d'un polymère poreux ou de tout autre matériau approprié afin d'éviter tout contact direct entre les électrodes.

Les batteries Li-ion sont déjà largement utilisées dans de nombreuses applications nomades. Cette tendance s'explique notamment par des densités d'énergie massique et volumique nettement supérieures à celles des accumulateurs classiques nickel cadmium (Ni-Cd) et nickel-hydrure métallique (Ni-MH), une absence d'effet mémoire, une autodécharge faible par rapport à d'autres accumulateurs et également par une baisse des coûts au kilowatt-heure liée à cette technologie.

Néanmoins, une amélioration de cette technologie est nécessaire pour gagner de nouveaux marchés tels que les véhicules électriques et hybrides qui demandent souvent une forte densité d'énergie, une densité de puissance élevée et une longue durée de vie.

Une fois la cellule de batterie Li-ion activée, c'est-à-dire lorsque l'assemblage de la cellule est réalisé et que l'électrolyte est imprégné dans la cellule, des réactions thermodynamiques sont engagées lors du premier cycle de charge de ladite cellule et les premiers échanges d'ions lithium entre les électrodes ont lieu. Des produits issus de ces réactions s'accumulent sur la surface des électrodes pour former une couche appelée « Solid Electrolyte Interphase » (SEI). Cette couche est un élément essentiel au bon fonctionnement de la batterie Li-ion, car non seulement, elle conduit très bien les ions lithium, mais elle présente aussi l'avantage de stopper la décomposition catalytique du solvant.

Néanmoins, il est connu que les batteries perdent entre 5 et 20% de la capacité potentielle de leur électrode positive, limitant ainsi la densité d'énergie desdites batteries, lors de la formation de cette couche au cours de laquelle l'électrode négative consomme du lithium de manière irréversible.

Afin de résoudre ce problème, plusieurs approches ont été envisagées.

Ainsi, du lithium métallique a été ajouté à l'électrode négative pour compenser la consommation de lithium irréversible lors du premier cycle de charge comme le document JP 2012/009209 le décrit. Cependant, la mise en oeuvre du lithium à l'état métallique pose de nombreux problèmes car il réagit violemment avec l'humidité et les solvants polaires couramment utilisés dans la mise en oeuvre des encres d'électrode (généralement l'eau ou la N-méthylpyrrolidone (NMP)).

Un sel sacrificiel peut également être ajouté à l'électrode positive comme le document FR 2 961 634 le décrit. Un sel particulier d'oxalate de lithium est divulgué dans ce brevet, mais il est jugé inadapté car il s'oxyde à un potentiel trop élevé.

Le document intitulé "Sacrificial salts: Compensating the initial charge irreversibility in lithium battereies", Elsevier, Electrochemistry communications 12 (2010) pages 1334-1347, divulgue la formation d'une batterie au lithium en utilisant un sel sacrificiel comme le $LiN_3$, $Li_2C_4O_4$, $Li_2C_3O_5$ ou $Li_2C_4O_6$ dans le matériau d'électrode positive.

Par ailleurs, des additifs ont été introduits dans l'électrolyte, comme le carbonate de vinylène ainsi que Aurbach et al l'envisage dans « On the use of vinylene carbonate (VC) as an additive to electrolyte solutions for Li-ion batteries » Electrochemica Acta 47 (2002), 1423-1439, ou encore le carbonate propanesultone comme Zuo et al l'envisage dans « Electrochemical reduction of 1,3-propane sultone on graphite electrodes and its application in Li-ion batteries » Electrochemica and Solid-State Letters 9 (4), A196-A199 (2006), afin d'améliorer la qualité de la SEI jouant ainsi un rôle sur la durée de vie de la cellule.

Cependant, l'inconvénient majeur lié à l'utilisation d'additifs est associé à la consommation du lithium de l'électrode positive pour la formation de la couche SEI. Cela a un impact sur la capacité initiale de la cellule mais également sur la durée totale du cycle de vie de ladite cellule.

La présente invention a pour objet de proposer une solution permettant de résoudre le problème lié à la capacité irréversible due au premier cycle de formation des batteries Li-ion et permettant d'augmenter la durabilité desdites batteries.

Selon l'invention, un procédé de formation d'une cellule de batterie Li-ion comprenant un matériau pour électrode positive présentant un taux de porosité allant de 20 à 35% et comprenant au moins un sel sacrificiel, un matériau pour électrode négative, un séparateur et un électrolyte, comprend les étapes successives suivantes :

(a) chauffe de la cellule à une température $T_1$ allant de 30 à 45°C ;
(b) charge de la cellule jusqu'à un potentiel inférieur ou égal à 4,8 V, de préférence allant de 4,6 à 4,8 V, de préférence encore de 4,7 à 4,8V.

Le procédé selon l'invention permet de réduire de manière importante la perte de capacité de l'électrode positive de la cellule de batterie Li-ion lors du premier cycle de charge, entrainant ainsi une augmentation de la durée de vie de ladite batterie.

D'autres avantages et caractéristiques de l'invention apparaitront plus clairement à l'examen de la description détaillée et des dessins annexés sur lesquels :

- la figure 1 est un graphe représentant l'évolution du potentiel de trois cellules de batterie Li-ion en fonction du temps ;
- la figure 2 est un graphe représentant l'évolution de la capacité de décharge et l'évolution de la résistance interne de trois cellules de batterie Li-ion, en fonction du nombre de cycles ;
- la figure 3 est un graphe représentant l'évolution de la capacité de décharge et l'évolution de la résistance de trois cellules de batterie Li-ion présentant des taux particuliers de porosité, en fonction du nombre de cycles.

Dans la description de l'invention, le terme « à base de » est synonyme de « comprenant majoritairement ».

Il est par ailleurs précisé que les expressions « de... à... » utilisées dans la présente description doivent s'entendre comme incluant chacune des bornes mentionnées.

Comme expliqué précédemment, le procédé de formation selon l'invention concerne une cellule de batterie Li-ion comprenant un matériau pour électrode positive présentant un taux de porosité allant de 20 à 35% et comprenant au moins un sel sacrificiel, un matériau pour électrode négative, un séparateur et un électrolyte.

La densité réelle de l'électrode (Dr) est calculée à partir de la masse et de l'épaisseur du dépôt d'électrode. Grâce aux densités de chaque composant, la densité théorique (compacte) de dépôt (Dth) peut être calculée. Ainsi, le taux de porosité (tP, exprimé en pourcentage), défini comme le taux de vide au sein de l'électrode, est donné par l'équation (I) suivante :

$$tP = (1 - Dr/Dth)*100 \ (I).$$

Le sel sacrificiel est un composé capable de s'oxyder lors du premier cycle de charge de la cellule de batterie assemblée, à un potentiel allant par exemple de 2 à 5 V. Lors de son oxydation, le sel sacrificiel produit des ions (des ions $Li^+$ lorsque le sel sacrificiel est un sel du cation $Li^+$) qui pénètrent dans l'électrolyte. On dit alors que ledit sel a des propriétés pré-lithiantes. Lesdits ions compensent au moins partiellement la capacité perdue lors de la formation de la couche SEI sur l'électrode négative.

Par ailleurs, le sel oxydé crée une porosité au sein de l'électrode qui doit être finement contrôlée afin d'éviter une perte de performance de l'accumulateur Li-ion. En effet une porosité trop forte limite les contacts électroniques entre particules et augmente la résistance de la cellule électrochimique.

Selon un mode de réalisation particulier de l'invention, le sel sacrificiel est choisi parmi $Li_2C_2O_4$, $LiN_3$, $Li_2C_3O_5$, $Li_2C_4O_6$, $Li_2C_3O_3$, $Li_2C_4O_4$, $Li_2C_5O_5$, $Li_2C_6O_6$, $Li_2N_4O_2$ et $[Li_2N_2C_2O_2]_n$, n allant de 1 à 100, de préférence de 1 à 50, de préférence encore de 1 à 10, de préférence $Li_2C_2O_4$.

L'oxalate de lithium est un sel d'une capacité de 545 mAh/g, stable à l'air, qui peut être intégré dans une formulation d'électrode positive. Entre 4.5 et 5.5V vs. Li+/Li, il s'oxyde en libérant du dioxyde de carbone et deux ions lithium. Les ions lithiums libérés permettent de compenser la capacité irréversible de première charge d'une cellule de batterie Li-ion, augmentant ainsi sa capacité initiale. Le dioxyde de carbone est évacué en fin de formation, et sa masse (fonction du taux d'oxalate) ne contribue donc pas à celle de la batterie.

Selon une autre caractéristique de l'invention, le matériau pour électrode positive comprend de 3 à 10% en poids de sel sacrificiel, de préférence de 3 à 7%, de préférence encore de 4 à 6%, par rapport au poids total de l'électrode positive.

Avantageusement, le taux de porosité de l'électrode positive est de 25 à 35%.

De préférence, le matériau pour électrode positive comprend un matériau actif choisi parmi :

- les phosphates de structure olivine $Li_vT^aPO_4$, dans laquelle $0 \leq v \leq 1$ et $T^a$ est choisi parmi Fe, Ni, Co, Mn et leurs mélanges ;
- les matériaux de formule $Li_{1+u}(M_aD_b)_{1-u}O_2$, dans laquelle $0.01 \leq u \leq 0.33$, M est choisi parmi Ni, Mn, Co et leurs mélanges, D représente un métal ou plusieurs métaux dopant(s) choisi(s) parmi Na, Zn, Cd, Mg, Ti, Ca, Zr, Sr, Ba, Al et K, $0 \leq b \leq 0.05$ et $a + b = 1$ ; et
- les matériaux de structure spinelle choisis parmi $LiMn_2O_4$ et $LiNi_{0.5}Mn_{1.5}O_4$,

plus préférentiellement les phosphates de structure olivine, encore plus préférentiellement $LiFePO_4$.

Le potentiel d'oxydation de l'oxalate de lithium est trop élevé pour être utilisé avec un certain nombre d'électrodes positives, comme l'électrode à base de $LiNi_xMn_yCo_zO_2$ (NMC), où x+y+z=1, l'électrode à base de $LiNi_{0.8}Co_{0.15}Al_{0.05}O_2$ (NCA) ou l'électrode à base de $LiCoO_2$ (LCO), dont la structure est instable au-dessus de 4.5V.

Cependant, avec des matériaux de type spinelle ($LiMn_2O_4$ ou $LiNi_{0.5}Mn_{1.5}O_4$) ou phosphate lithié $Li(Fe,Mn,Ni)PO_4$, ou encore de type ($Li_{1+x}MO_2$), des potentiels de 5V peuvent être envisagés, car soit le domaine d'activité de ces matériaux est confondu avec le potentiel d'activation de l'oxalate, soit il est totalement disjoint. Par exemple avec un matériau de type $LiFePO_4$, l'activité redox se situe entre 3.4V et 3.5V, et ne s'oxyde plus au-delà. En ajoutant le sel d'oxalate, on peut l'oxyder à 5V sans risquer de perturber la structure du matériau actif.

Toutefois il est connu que les électrolytes standards des batteries Li-ion (à base de carbonates) commencent à s'oxyder au-dessus de 4V, phénomène qui devient prédominant au-delà de 5V. Il est donc souhaitable de diminuer au maximum le potentiel maximum de charge pour éviter ces réactions parasites.

Préférentiellement, le matériau pour électrode positive comprend un ou plusieurs liants.

De manière préférée, le ou les liants sont des polymères organiques, de préférence les latex de polybutadiène-styrène, les polyesters, les polyéthers, les dérivés polymère de méthylméthacrylate, les dérivés polymères d'acrylonitrile, la carboxyle méthyle cellulose et ses dérivés, les polyvinyles acétates ou polyacrylate acétate, les polyfluorure de vinylidène, et leurs mélanges.

Selon une variante du procédé selon l'invention, le matériau pour électrode négative est à base de graphite. Le carbone graphite peut être choisi parmi les carbones graphite synthétiques, et naturels à partir de précurseurs naturels suivis d'une purification et/ou d'un post traitement. D'autres matériaux actifs à base de carbone peuvent être utilisés comme le carbone pyrolitique, le carbone amorphe, le charbon actif, le coke, le brai de houille et le graphène. Des mélanges de graphite avec l'un ou plusieurs de ces matériaux sont possibles. Des matériaux possédant une structure noyau-enveloppe peuvent être utilisés quand le noyau comprend du graphite haute capacité et lorsque l'enveloppe comprend un matériau à base de carbone protégeant le noyau de la dégradation liée au phénomène répété de l'intercalation/désintercalation des ions lithiums.

Avantageusement, le matériau pour électrode négative est à base d'un composite choisi parmi un composite silicium/graphite, étain/graphite, oxyde d'étain/graphite, tel que $SnO_2$/graphite, et leurs mélanges, de préférence un composite silicium/graphite.

Préférentiellement, le composite silicium/graphite comprend de 0 à 30% en poids de silicium par rapport au poids total du composite, plus préférentiellement de 0 à 15%, encore plus préférentiellement de 5 à 10%.

De manière préférée, le séparateur est localisé entre les électrodes et joue le rôle d'isolant électrique. Plusieurs matériaux peuvent être utilisés comme séparateurs. Les séparateurs sont généralement composés de polymères poreux, de préférence de polyéthylène et/ou de polypropylène.

Avantageusement, le séparateur utilisé est le séparateur Celgard® 2325, c'est-à-dire une membrane microporeuse monocouche d'une épaisseur de 25 µm composée de polypropylène.

Préférentiellement, ledit électrolyte est un électrolyte liquide.

Selon une autre caractéristique de l'invention, ledit électrolyte comprend un ou plusieurs sels de lithium.

Avantageusement, ledit ou lesdits sels de lithium sont choisis parmi le lithium bis[(trifluorométhyl)sulfonyl]imide ($LiN(CF_3SO_2)_2$), le lithium trifluorométhane sulfonate ($LiCF_3SO_3$), le lithium bis(oxalato)borate (LiBOB), le lithium bis(perfluoroéthylsulfonyl)imide ($LiN(CF_3CF_2SO_2)_2$), $LiClO_4$, $LiAsF_6$, $LiPF_6$, $LiBF_4$, LiI, $LiCH_3SO_3$, $LiB(C_2O_4)_2$, $LiR_FSOSR_F$, $LiN(R_FSO_2)_2$, $LiC(R_FSO_2)_3$, $R_F$ étant un groupement choisi parmi un atome de fluor et un groupement perfluoroalkyle comportant de un à huit atomes de carbone.

De préférence, l'électrolyte comprend un mélange de solvants comprenant du carbonate d'éthylène et au moins un solvant choisi parmi le carbonate d'éthyle et de méthyle, le carbonate de diméthyle, le carbonate de diéthyle et leurs mélanges.

Selon un mode de réalisation particulier de l'invention, l'électrolyte comprend un mélange de carbonate d'éthylène, de carbonate de diméthyle et de carbonate d'éthyle et de méthyle selon un ratio 1/1/1 en volume avec le sel de lithium $LiPF_6$ à 1M.

Comme mentionné précédemment, l'étape (a) du procédé de formation selon l'invention consiste en une chauffe de la cellule à une température $T_1$ allant de 30 à 45°C.

De manière préférée, la température $T_1$ va de 35 à 45°C, plus préférentiellement la température $T_1$ est de 40°C.

Comme expliqué ci-dessus, l'étape (b) du procédé de formation selon l'invention consiste en une charge de la cellule jusqu'à un potentiel inférieur ou égal à 4,8 V, de préférence allant de 4,6 à 4,8 V, de préférence encore de 4,7 à 4,8 V. Plus préférentiellement, la charge de la cellule est réalisée jusqu'à un potentiel allant de 4,75 à 4,8V.

Selon un mode de réalisation particulier de l'invention, un procédé de formation selon l'invention, appliqué à une cellule de batterie comprenant un matériau pour électrode positive présentant un taux de porosité allant de 20 à 35%, de préférence de 35%, ledit matériau comprenant un matériau actif de formule $LiFePO_4$ et 5% en poids d'oxalate de lithium par rapport au poids total de l'électrode positive, un matériau pour électrode négative, un séparateur et un électrolyte, comprend les étapes successives suivantes :

(a) une chauffe de la cellule à une température $T_1$ de 40°C ;
(b) une charge de la cellule jusqu'à un potentiel allant de 4,7 à 4,8 V, de préférence de 4,8 V.

**EXEMPLES**

**1. Préparation d'une cellule de batterie Li-ion comprenant une électrode positive comprenant de l'oxalate de lithium**

1.1 Préparation d'une électrode positive

Un matériau actif de formule $LiFePO_4$ est utilisé. L'électrode positive est préparée en mélangeant 85% en poids de matériau actif, 5% en poids d'un additif carbone Super P®, 5% en poids de polyfluorure de vinylidène dans du N-méthyl-2-pyrrolidone (NMP) et 5 % en poids d'oxalate de lithium $Li_2C_2O_4$.

L'électrode est fabriquée en déposant le mélange sur une feuille d'aluminium de 20 µm d'épaisseur. L'électrode est séchée et compressée par calandrage à 80°C.

## 1.2 Préparation d'une électrode négative

Une électrode négative à base d'un composite silicium/graphite (Hitachi Chemical) a été préparée. L'électrode négative est préparée en mélangeant 94% en poids de matériau actif, 2% en poids de carboxyméthylcellulose (CMC), et 4% en poids de latex Styrofan®, c'est-à-dire un copolymère styrène-butadiène carboxylé.

L'électrode est fabriquée en déposant le mélange sur une feuille de cuivre de 10 $\mu$m d'épaisseur. L'électrode est séchée et compressée par calandrage à 80°C.

## 1.3 Séparateur

Le séparateur Celgard® 2325 est utilisé afin d'éviter tout court-circuit entre l'électrode positive et l'électrode négative durant les cycles de charge et de décharge. Le séparateur Celgard® 2325 est une membrane microporeuse monocouche d'une épaisseur de 25 $\mu$m composée de polypropylène.

## 1.4 Electrolyte

L'électrolyte utilisé est composé d'1M de sel de lithium $LiPF_6$ dissous dans un mélange de carbonate d'éthylène, de carbonate de diméthyle et de carbonate d'éthyle et de méthyle selon un ratio 1/1/1 en volume.

## 1.5 Cellule électrochimique

Une cellule de batterie Li-ion est assemblée par empilement de l'électrode positive, d'une surface de 10 cm$^2$, et de l'électrode négative telles que décrites ci-dessus, le séparateur, tel que décrit ci-dessus, étant localisé entre les électrodes, puis la cellule est imprégnée de l'électrolyte, tel que décrit ci-dessus.

## 2. Performances électrochimiques de la cellule de batterie Li-ion

## 2.1 Evaluation de la variation du potentiel de la cellule de batterie Li-ion en fonction du temps

*Méthode*

Trois procédés de formation particuliers, respectivement nommés procédé A, procédé B et procédé C, ont été appliqués à la cellule de batterie Li-ion telle que préparée ci-dessus.

Le procédé A est appliqué à la cellule de batterie Li-ion nommée cellule A. Le procédé B est appliqué à la cellule nommée cellule B et le procédé C est appliqué à la cellule nommée cellule C.

Le procédé A comparatif comprend une étape de chauffe de la cellule A à 22°C, puis une étape de charge de la cellule A jusqu'à un potentiel de 4,8 V.

Le procédé B selon l'invention comprend une étape de chauffe de la cellule B à 40°C, puis une étape de charge de la cellule B jusqu'à un potentiel de 4,8 V.

Le procédé C comparatif comprend une étape de chauffe de la cellule C à 50°C, puis une étape de charge de la cellule C jusqu'à un potentiel de 4,8 V.

*Résultat*

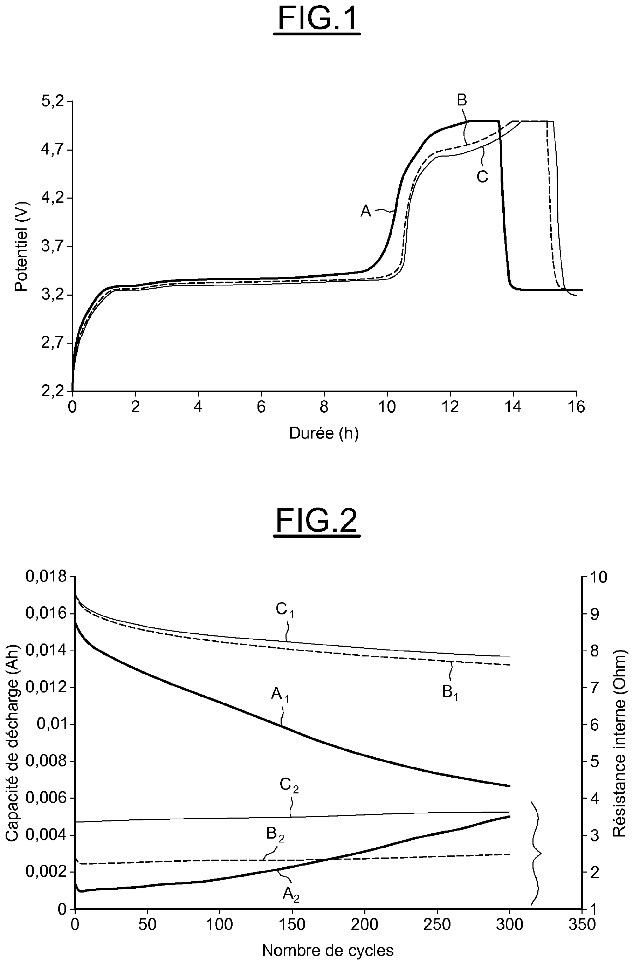

Sur la figure 1, les courbes A, B et C correspondent respectivement à l'évolution du potentiel des cellules A, B et C.

La figure 1 montre clairement que les cellules B et C présentent un comportement électrochimique différent de celui de la cellule A.

Lorsque le potentiel est voisin de 3,2-3,3 V, les 3 courbes présentent un plateau qui correspond à l'activité rédox du matériau actif de formule $LiFePO_4$.

Lorsque le potentiel est proche de 4,8 V, la courbe A présente un plateau qui correspond à l'activité redox de l'oxalate de lithium. En revanche, les courbes B et C présentent un plateau, qui correspond également à l'activité redox de l'oxalate de lithium, lorsque le potentiel est de l'ordre de 4,5 V.

Ainsi, la figure 1 montre qu'une augmentation de la température de 22 à 40-50°C permet une activation de l'oxalate de lithium à un potentiel moins élevé de sorte qu'il est possible de diminuer le potentiel de fin de charge à 4,8 V.

Ceci représente un avantage très intéressant en raison du fait que les électrolytes conventionnels de batterie Li-ion, c'est-à-dire à base de solvants carbonates, sont instables à un potentiel supérieur à 5 V.

## 2.2 Evaluation de la variation de la capacité de décharge et de la résistance interne de la cellule de batterie Li-ion en fonction du nombre de cycles

*Méthode*

La méthode est identique à celle citée au paragraphe 2.1.

*Résultat*

Sur la figure 2, la courbe A1 correspond à l'évolution de la capacité de décharge de la cellule A et la courbe A2 correspond à l'évolution de la résistance interne de la cellule A. La courbe B1 correspond à l'évolution de la capacité de décharge de la cellule B et la courbe B2 correspond à l'évolution de la résistance interne de la cellule B. La courbe C1 correspond à l'évolution de la capacité de décharge de la cellule C et la courbe C2 correspond à l'évolution de la résistance interne de la cellule C.

La figure 2 montre qu'une faible capacité de décharge est observée après 300 cycles (courbe A1), et que la résistance interne de la cellule A augmente significativement avec le nombre de cycles (courbe A2).

En revanche, de bonnes capacités de décharges sont observées pour les cellules B et C d'après les courbes B1 et C1. La cellule C présente une résistance interne plus élevée (courbe C2) que celle de la cellule B (courbe B2). En effet, une température trop élevée et le potentiel de 4,8 V conduisent à une résistance interne élevée du fait de la dégradation de l'électrolyte lors de l'activation du sel sacrificiel, l'oxalate de lithium.

Ainsi, il est clairement montré qu'une chauffe de la cellule à une température autour de 40°C, allant de 30 à 45°C, est idéale pour obtenir à la fois une résistance interne faible et stable, une bonne capacité de décharge et une bonne cyclabilité.

2.3 Evaluation de la variation de la capacité de décharge et de la résistance interne de cellules de batterie Li-ion présentant des taux particuliers de porosité, en fonction du nombre de cycles

*Méthode*

Le procédé de formation B selon l'invention a été appliqué à trois cellules de batterie Li-ion, nommées cellule D, cellule E et cellule F, comprenant chacune une électrode positive, chacune des électrodes positives présentant trois taux de porosité différents, respectivement de 47%, 35% et de 42%, obtenus par trois niveaux différents de calandrage.

Ainsi, un procédé de formation D comparatif a été appliqué à la cellule D ; un procédé de formation E selon l'invention a été appliqué à la cellule E ; un procédé de formation F comparatif a été appliqué à la cellule F.

*Résultat*

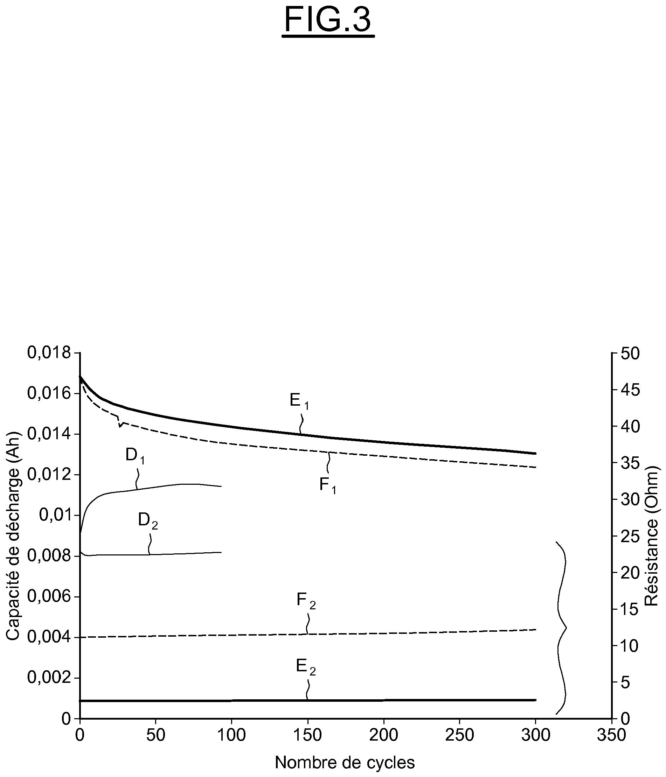

Sur la figure 3, la courbe D1 correspond à l'évolution de la capacité de décharge de la cellule D et la courbe D2 correspond à l'évolution de la résistance de la cellule D. La courbe E1 correspond à l'évolution de la capacité de décharge de la cellule E et la courbe E2 correspond à l'évolution de la résistance de la cellule E. La courbe F1 correspond à l'évolution de la capacité de décharge de la cellule F et la courbe F2 correspond à l'évolution de la résistance de la cellule F.

La figure 3 montre que la cellule D présente une résistance interne élevée (courbe D2), une faible capacité de décharge et une mauvaise cyclabilité (courbe D1).

La cellule E présente une faible résistance (courbe E2) et une bonne capacité de décharge (courbe E1).

La cellule F présente une résistance interne relativement élevée (courbe F2) et une bonne capacité de décharge (courbe F1).

Ainsi, il est montré qu'un taux de porosité de 35% dans l'électrode positive permet d'obtenir à la fois une résistance interne faible et stable, une bonne capacité de décharge et une bonne cyclabilité.

Au-delà d'un taux de porosité de 35%, la conductivité électrique de l'électrode positive est limitée et la résistance de la batterie augmente de manière dramatique. De fait, les performances de la batterie chutent.

**Revendications**

1. Procédé de formation d'une cellule de batterie Li-ion comprenant un matériau pour électrode positive présentant un taux de porosité allant de 20 à 35% et comprenant au moins un sel sacrificiel, un matériau pour électrode négative, un séparateur et un électrolyte, **caractérisé en ce qu'**il comprend les étapes successives suivantes :

   (a) chauffe de la cellule à une température $T_1$ allant de 30 à 45°C ;
   (b) charge de la cellule jusqu'à un potentiel inférieur ou égal à 4,8 V, de préférence allant de 4,6 à 4,8 V, de préférence encore de 4,7 à 4,8V.

2. Procédé selon la revendication 1, dans lequel le sel sacrificiel est choisi parmi $Li_2C_2O_4$, $LiN_3$, $Li_2C_3O_5$, $Li_2C_4O_6$, $Li_2C_3O_3$, $Li_2C_4O_4$, $Li_2C_5O_5$, $Li_2C_6O_6$, $Li_2N_4O_2$ et $[Li_2N_2C_2O_2]_n$, n allant de 1 à 100, de préférence $Li_2C_2O_4$.

3. Procédé selon la revendication 1 ou 2, dans lequel le matériau pour électrode positive comprend de 3 à 10%, de préférence de 3 à 7%, de préférence encore de 4 à 6%, en poids de sel sacrificiel par rapport au poids total de l'électrode positive.

4. Procédé selon l'une quelconque des revendications précédentes, dans lequel le matériau pour électrode positive comprend un matériau actif choisi parmi :

   - les phosphates de structure olivine $Li_vT^aPO_4$, dans laquelle $0 \leq v \leq 1$ et $T^a$ est choisi parmi Fe, Ni, Co, Mn et leurs mélanges ;
   - les matériaux de formule $Li_{1+u}(M_aD_b)_{1-u}O_2$, dans laquelle $0{,}01 \leq u \leq 0{,}33$, M est choisi parmi Ni, Mn, Co et leurs mélanges, D représente un métal ou plusieurs métaux dopant(s) choisi(s) parmi Na, Zn, Cd, Mg, Ti, Ca, Zr, Sr, Ba, Al et K, $0 \leq b \leq 0{,}05$ et $a + b = 1$ ; et
   - les matériaux de structure spinelle choisis parmi $LiMn_2O_4$ et $LiNi_{0{,}5}Mn_{1{,}5}O_4$,

   plus préférentiellement les phosphates de structure olivine, encore plus préférentiellement $LiFePO_4$.

5. Procédé selon l'une quelconque des revendications précédentes, dans lequel le matériau pour électrode positive comprend un ou plusieurs liants.

6. Procédé selon l'une quelconque des revendications précédentes, dans lequel le matériau pour électrode négative est à base de graphite.

7. Procédé selon l'une quelconque des revendications précédentes, dans lequel ledit électrolyte comprend un ou plusieurs sels de lithium.

8. Procédé selon la revendication précédente, dans lequel ledit ou lesdits sel(s) de lithium sont choisis parmi le lithium bis[(trifluorométhyl)sulfonyl]imide ($LiN(CF_3SO_2)_2$), le lithium trifluorométhane sulfonate ($LiCF_3SO_3$), le lithium bis(oxalato)borate (LiBOB), le lithium bis(perfluoroéthylsulfonyl)imide ($LiN(CF_3CF_2SO_2)_2$), $LiClO_4$, $LiAsF_6$, $LiPF_6$, $LiBF_4$, LiI, $LiCH_3SO_3$, $LiB(C_2O_4)_2$, $LiR_FSOSR_F$, $LiN(R_FSO_2)_2$, $LiC(R_FSO_2)_3$, $R_F$ étant un groupement choisi parmi un atome de fluor et un groupement perfluoroalkyle comportant de un à huit atomes de carbone.

9. Procédé selon l'une quelconque des revendications précédentes, dans lequel ledit électrolyte comprend un mélange de solvants comprenant du carbonate d'éthylène et au moins un solvant choisi parmi le carbonate d'éthyle et de méthyle, le carbonate de diméthyle, le carbonate de diéthyle et leurs mélanges.

10. Procédé selon l'une quelconque des revendications précédentes, dans lequel la température $T_1$ va de 35 à 45°C, plus préférentiellement la température $T_1$ est de 40°C.


**Patentansprüche**

1. Verfahren zur Herstellung einer Zelle einer Lithium-Ionen-Batterie, die ein Material für eine Positivelektrode, das einen Porositätsgrad zwischen 20 und 35% aufweist und mindestens ein Opfersalz umfasst, ein Material für eine Negativelektrode, einen Separator und einen Elektrolyten umfasst, **dadurch gekennzeichnet, dass** es folgende aufeinanderfolgende Schritte umfasst:

   (a) Erwärmen der Zelle auf eine Temperatur $T_1$ zwischen 30 und 45°C;
   (b) Laden der Zelle bis auf ein Potenzial von kleiner gleich 4,8 V, vorzugsweise 4,6 bis 4,8 V, noch bevorzugter 4,7 bis 4,8 V.

2. Verfahren nach Anspruch 1, wobei das Opfersalz ausgewählt wird aus $Li_2C_2O_4$, $LiN_3$, $Li_2C_3O_5$, $Li_2C_4O_6$, $Li_2C_3O_3$, $Li_2C_4O_4$, $Li_2C_5O_5$, $Li_2C_6O_6$, $Li_2N_4O_2$ und $[Li_2N_2C_2O_2]_n$, wobei n zwischen 1 und 100 liegt, vorzugsweise $Li_2C_2O_4$ ist.

3. Verfahren nach Anspruch 1 oder 2, wobei das Material für die Positivelektrode bezogen auf das Gesamtgewicht der Positivelektrode 3 bis 10 Gew.-%, vorzugsweise 3 bis 7 Gew.-%, noch bevorzugter 4 bis 6 Gew.-% Opfersalz umfasst.

4. Verfahren nach einem der vorhergehenden Ansprüche, wobei das Material für die Positivelektrode ein aktives Material umfasst, ausgewählt aus:

   - Phosphaten mit Olivinstruktur $Li_vT^aPO_4$, wobei $0 \leq v \leq 1$ und $T^a$ ausgewählt wird aus Fe, Ni, Co, Mn und deren Mischungen;
   - Materialien mit der Formel $Li_{1+u}(M_aD_b)_{1-u}O_2$, wobei $0,01 \leq u \leq 0,33$, M ausgewählt wird aus Ni, Mn, Co und deren Mischungen, D für ein Dotierungsmetall oder mehrere Dotierungsmetalle steht, das bzw. die ausgewählt wird bzw. werden aus Na, Zn, Cd, Mg, Ti, Ca, Zr, Sr, Ba, Al und K, $0 \leq b \leq 0,05$ und $a + b = 1$; und
   - Materialien mit Spinellstruktur, ausgewählt aus $LiMn_2O_4$ und $LiNi_{0,5}Mn_{1,5}O_4$,

   bevorzugter Phosphaten mit Olivinstruktur, noch bevorzugter $LiFePO_4$.

5. Verfahren nach einem der vorhergehenden Ansprüche, wobei das Material für die Positivelektrode ein oder mehrere Bindemittel umfasst.

6. Verfahren nach einem der vorhergehenden Ansprüche, wobei das Material für die Negativelektrode auf Graphit basiert.

7. Verfahren nach einem der vorhergehenden Ansprüche, wobei der Elektrolyt ein oder mehrere Lithiumsalze umfasst.

8. Verfahren nach dem vorhergehenden Anspruch, wobei das oder die Lithiumsalz(e) ausgewählt werden aus Lithium-bis[(trifluormethyl)sulfonyl]imid ($LiN(CF_3SO_2)_2$), Lithiumtrifluormethansulfonat ($LiCF_3SO_3$), Lithium-bis(oxalato)borat (LiBOB), Lithiumbis (perfluorethylsulfonyl) imid ($LiN(CF_3CF_2SO_2)_2$), $LiClO_4$, $LiAsF_6$, $LiPF_6$, $LiBF_4$, LiI, $LiCH_3SO_3$, $LiB(C_2O_4)_2$, $LiR_FSOSR_F$, $LiN(R_FSO_2)_2$, $LiC(R_FSO_2)_3$, wobei $R_F$ eine Gruppe ist, die aus einem Fluoratom und einer Perfluoralkylgruppe ausgewählt wird, die ein bis acht Kohlenstoffatome aufweist.

9. Verfahren nach einem der vorhergehenden Ansprüche, wobei der Elektrolyt eine Mischung aus Lösungsmitteln umfasst, die Ethylencarbonat und mindestens ein Lösungsmittel umfasst, das aus Ethyl- und Methylcarbonat, Dimethylcarbonat, Diethylcarbonat und deren Mischungen ausgewählt wird.

10. Verfahren nach einem der vorhergehenden Ansprüche, wobei die Temperatur $T_1$ zwischen 35 und 45 °C liegt, die Temperatur $T_1$ bevorzugter 40 °C beträgt.

**Claims**

1. Method for forming a lithium-ion battery cell comprising a positive electrode material having a level of porosity in the range from 20 to 35% and comprising at least one sacrificial salt, a negative electrode material, a separator and an electrolyte, **characterized in that** it comprises the following successive steps:

   (a) heating the cell to a temperature $T_1$ in the range from 30 to 45°C;
   (b) charging the cell to a potential less than or equal to 4.8 V, preferably from 4.6 to 4.8 V, more preferably from 4.7 to 4.8 V.

2. Method according to Claim 1, in which the sacrificial salt is selected from $Li_2C_2O_4$, $LiN_3$, $Li_2C_3O_5$, $Li_2C_4O_6$, $Li_2C_3O_3$, $Li_2C_4O_4$, $Li_2C_5O_5$, $Li_2C_6O_6$, $Li_2N_4O_2$ and $[Li_2N_2C_2O_2]_n$, n being from 1 to 100, preferably $Li_2C_2O_4$.

3. Method according to Claim 1 or 2, in which the positive electrode material comprises from 3 to 10%, preferably from 3 to 7%, more preferably from 4 to 6%, by weight of sacrificial salt relative to the total weight of the positive electrode.

4. Method according to any one of the preceding claims, in which the positive electrode material comprises an active material selected from:

   - phosphates of olivine structure $Li_vT^aPO_4$, in which $0 \leq v \leq 1$ and $T^a$ is selected from Fe, Ni, Co, Mn and mixtures thereof;
   - materials of formula $Li_{1+u}(M_aD_b)_{1-u}O_2$, in which $0.01 \leq u \leq 0.33$, M is selected from Ni, Mn, Co and mixtures thereof, D represents one or more doping metals selected from Na, Zn, Cd, Mg, Ti, Ca, Zr, Sr, Ba, Al and K, $0 \leq b \leq 0.05$ and a + b = 1; and
   - materials of spinel structure selected from $LiMn_2O_4$ and $LiNi_{0.5}Mn_{1.5}O_4$,

   more preferably the phosphates of olivine structure, even more preferably $LiFePO_4$.

5. Method according to any one of the preceding claims, in which the positive electrode material comprises one or more binders.

6. Method according to any one of the preceding claims, in which the negative electrode material is based on graphite.

7. Method according to any one of the preceding claims, in which said electrolyte comprises one or more lithium salts.

8. Method according to the preceding claim, in which said lithium salt(s) are selected from lithium bis[(trifluoromethyl)sulfonyl]imide ($LiN(CF_3SO_2)_2$), lithium trifluoromethane sulfonate ($LiCF_3SO_3$), lithium bis(oxalato)borate (LiBOB), lithium bis(perfluoroethylsulfonyl)imide ($LiN(CF_3CF_2SO_2)_2$), $LiClO_4$, $LiAsF_6$, $LiPF_6$, $LiBF_4$, LiI, $LiCH_3SO_3$, $LiB(C_2O_4)_2$, $LiR_FSOS$-$R_F$, $LiN(R_FSO_2)_2$, $LiC(R_FSO_2)_3$, $R_F$ being a group selected from a fluorine atom and a perfluoroalkyl group comprising from one to eight carbon atoms.

9. Method according to any one of the preceding claims, in which said electrolyte comprises a mixture of solvents comprising ethylene carbonate and at least one solvent selected from ethyl and methyl carbonate, dimethyl carbonate, diethyl carbonate and mixtures thereof.

10. Method according to any one of the preceding claims, in which the temperature $T_1$ is in the range from 35 to 45°C, more preferably the temperature $T_1$ is 40°C.

# FIG.1

# FIG.2

# FIG.3

## RÉFÉRENCES CITÉES DANS LA DESCRIPTION

**Documents brevets cités dans la description**

- JP 2012009209 A

- FR 2961634

**Littérature non-brevet citée dans la description**

- Sacrificial salts: Compensating the initial charge irreversibility in lithium battereies. Electrochemistry communications. Elsevier, 2010, vol. 12, 1334-1347
- **AURBACH et al.** On the use of vinylene carbonate (VC) as an additive to electrolyte solutions for Li-ion batteries. *Electrochemica Acta,* 2002, vol. 47, 1423-1439

- **ZUO et al.** Electrochemical reduction of 1,3-propane sultone on graphite electrodes and its application in Li-ion batteries. *Electrochemica and Solid-State Letters,* 2006, vol. 9 (4), A196-A199